# NEUE EUROPÄISCHE PATENTSCHRIFT

(11) **EP 0 904 468 B2**
(45) Veröffentlichungstag und Bekanntmachung des Hinweises auf die Entscheidung über den Einspruch: **14.03.2007**
(45) Hinweis auf die Patenterteilung: 13.03.2002
(21) Anmeldenummer: 97923950.6
(22) Anmeldetag: 20.05.1997
(51) Int. Cl.: E02F 9/12, E02F 9/22

(54) **DREHWERKSTEUERUNG MIT DOPPELSEITIGER BREMSUNG**
ROTARY MECHANISM CONTROL SYSTEM WITH BILATERAL BRAKING
COMMANDE DE DISPOSITIF DE ROTATION A FREINAGE BILATERAL

(30) Priorität: 22.05.1996 DE 19620664; 25.06.1996 DE 19625393
(43) Veröffentlichungstag der Anmeldung: 31.03.1999
(73) Patentinhaber: Brueninghaus Hydromatik GmbH, 89275 Elchingen (DE)
(72) Erfinder: SCHNIEDERJAN, Reinhold, D-89233 Neu-Ulm (DE); ADLER, Bernhard, D-89275 Elchingen 1 (DE)
(74) Vertreter: Körfer, Thomas
(86) Internationale Anmeldenummer: PCT/EP1997/002570
(87) Internationale Veröffentlichungsnummer: WO 1997/044536

(56) Entgegenhaltungen:
- DE-A- 4 001 888
- DE-A- 4 116 649
- DE-A- 4 231 637
- DE-A- 4 405 472
- US-A- 4 554 991
- PATENT ABSTRACTS OF JAPAN vol. 010, no. 187 (M-493), 2.Juli 1986 & JP 61 031534 A (KOMATSU LTD), 14.Februar 1986,
- W. Nimbler "Schwerpunkte der Hydrostatik in Baumaschinen", Sonderdruck aus VDBUM-Information, 1982.

## Beschreibung

Die vorliegende Erfindung betrifft eine hydraulische Steuerung insbesondere zum Ansteuern des Drehwerks eines Baggers.

Eine hydraulische Steuerung nach dem Oberbegriff des Anspruches 1 ist aus der DE 44 05 472 A1 bekannt. Aus dieser Druckschrift geht eine hydraulische Steuerung zum Ansteuern eines Drehwerks mit einem Bremsventil hervor. Das Bremsventil dient zum feinfühligen Abbremsen des Drehwerks durch Steuern des Bremsmoments. Das Bremsventil verbindet eine die Stellvorrichtung ansteuernde Vorsteuereinrichtung mit dem Druckfluid-Tank. Dadurch wird der Rückfluß des Druckfluids aus der beim Beschleunigen des Drehwerks beaufschlagten Stelldruckkammer zum Druckfluid-Tank während des Abbremsens des Drehwerks gedrosselt und somit der Abbremsvorgang verzögert.

Nachteilig ist bei dieser bekannten hydraulischen Drehwerksteuerung jedoch, daß lediglich ein Bremsventil vorgesehen ist und daher der Rückfluß des Druckfluids aus den beiden Stelldruckkammern der Stellvorrichtung nicht unabhängig voneinander erfolgt. Dies kann die Zuverlässigkeit der hydraulischen Steuerung beeinflussen. Ferner ist bei dieser bekannten hydraulischen Drehwerksteuerung nachteilig, daß das Bremsventil auch dann anspricht, wenn der Drehbewegung des Drehwerks beim Abbremsen ein Widerstand entgegensteht. Ein solcher Widerstand wird z.B. dadurch hervorgerufen, daß sich der Bagger auf einer schiefen Ebene befindet und sich der Ausleger des Drehwerks während des Bremsvorganges bergauf bewegt. Diese Situation ist im Baustellenbereich mit naturgemäß unebenem Untergrund relativ häufig. Desweiteren entsteht ein entsprechender Widerstand, wenn der Ausleger des Drehwerks in ein Haufwerk od.dgl. hineinschwenkt.

In der DE 41 16 649 A 1 wird eine hydraulische Steuerung für eine hydraulische Maschine eines Fahrwerks in einem Bagger vorgestellt. Die hydraulische Steuerung besteht aus zwei Bremsventilen zur Einstellung eines definierten Bremsverhaltens für das Verzögern der hydraulischen Maschine in beiden Drehrichtungen. Die beiden Bremsventile sind dafür jeweils in den beiden Verbindungsleitungen zwischen einer der beiden Stelldruckkammer der Verstellvorrichtung und dem gemeinsamen Druckfluidtank geschaltet. Da die hydraulische Steuerung für einen Fahrantrieb ausgelegt ist, können mit dieser Anordnung die für ein Drehwerk charakteristischen Bremsvorgänge - widerstandsbehaftetes und widerstandsfreies Bremsen - nicht realisiert werden.

Es ist daher die Aufgabe der vorliegenden Erfindung, die bekannte Drehwerksteuerung so weiterzubilden, daß die Zuverlässigkeit erhöht wird.

Die Aufgabe wird durch die kennzeichnenden Merkmale des Anspruches 1 in Verbindung mit den gattungsbildenden Merkmalen gelöst.

Der Lösung nach Anspruch 1 liegt die Erkenntnis zugrunde, daß in den die Hydropumpe mit dem Hydromotor verbindenden Arbeitsleitungen ein Druckwechsel erfolgt, wenn sich das Drehwerk während des Abbremsvorganges widerstandsfrei weiterdrehen kann. Wenn das Drehwerk während des Abbremsvorgangs dagegen einem Widerstand z.B. durch die Hangabtriebskraft oder einen Anschlag ausgesetzt ist, bleibt dieser Druckseitenwechsel aus, d.h. die während der Beschleunigungsphase mit Hochdruck beaufschlagte Arbeitsleitung ist auch während des Bremsvorgangs mit Hochdruck beaufschlagt. Die Erfindung macht sich diese Erkenntnis dadurch zunutze, daß für jede der Stelldruckkammern jeweils ein separates Bremsventil vorgesehen ist, das jeweils mit einer der Arbeitsleitungen verbunden ist. Die Bremsventile werden dabei in Abhängigkeit von der Druckdifferenz zwischen dem Arbeitsdruck in der zugeordneten Arbeitsleitung und dem Steuerdruck angesteuert. Dabei spricht während des Bremsvorgangs bei im wesentlichen drucklosen Steuerleitungen nur dasjenige Bremsventil an, dessen zugeordnete Arbeitsleitung mit Hochdruck beaufschlagt ist.

Die Ansprüche 2 bis 10 beinhalten vorteilhafte Weiterbildungen der Erfindung.

Entsprechend Anspruch 2 ist jedes Bremsventil mit derjenigen Arbeitsleitung verbunden, die bei dem dem Bremsvorgang vorhergehenden Ausschwenken der Hydropumpe die Niederdruck-Rücklaufleitung des Antriebskreislaufs bildet.

Die Bremsventile können entsprechend Anspruch 3 als Schaltventile mit einer gedrosselten und einer ungedrosselten Schaltstellung ausgebildet sein. Während der Beschleunigungsphase, in welcher die Steuerleitungen mit Steuerdruck beaufschlagt sind, befinden sich die Bremsventile in ihrer ungedrosselten Schaltstellung. Während der Abbremsphase, in der die Steuerleitungen im wesentlichen druckfrei sind, wird dasjenige Bremsventil in seine gedrosselte Schaltstellung geschaltet, dessen zugeordnete Arbeitsleitung mit Hochdruck beaufschlagt ist.

Beim widerstandsfreien Abbremsen des Drehwerks findet in den Arbeitsleitungen ein Druckseitenwechsel statt, d.h. diejenige Arbeitsleitung, die während der Beschleunigungsphase die Niederdruck-Arbeitsleitung gebildet hat, bildet in der Abbremsphase die Hochdruck-Arbeitsleitung. Daher spricht dasjenige Abbremsventil an, dessen zugeordnete Stelldruckkammer während der Beschleunigungsphase mit Stelldruck beaufschlagt wurde. Wird das Drehwerk dagegen während des Abbremsvorgangs einem Widerstand ausgesetzt, so findet der Druckseitenwechsel nicht statt. Das Bremsventil, das derjenigen Stelldruckkammer zugeordnet ist, die während der Beschleunigungsphase mit Stelldruck beaufschlagt wurde, spricht in diesem Fall nicht an, so daß die entsprechende Stelldruckkammer über das in der ungedrosselten Schaltstellung befindende Bremsventil zügig entlastet werden kann. Dadurch wird ein unkontrolliertes Weiterschwenken des Drehwerks verhindert.

Entsprechend Anspruch 4 können die Bremsventile jeweils zwei Ansteuer-Druckkammern aufweisen, wobei eine der Ansteuer-Druckkammer mit der zugeordneten Arbeitsleitung und die andere Ansteuer-Druckkammer mit den Steuerleitungen verbunden ist. Zur Auswahl derjenigen Steuerleitung, die den größeren Druck führt, kann entsprechend Anspruch 5 ein Wechselventil vorgesehen sein.

Entsprechend Anspruch 6 können die Bremsventile besonders vorteilhaft unmittelbar an den Steuerleitungen angeordnet sein, wobei entsprechend Anspruch 7 zwischen den Bremsventilen und den zugeordneten Stelldruckkammern eine Nachsaugeeinrichtung vorgesehen sein kann, um auf der Saugseite beim Rückstellen des Stellkolbens ein zügiges Nachfließen von Druckfluid zu gewährleisten.

Zur Begrenzung des Steuerdrucks in den Steuerleitungen auf einen Maximaldruck kann ferner entsprechend Anspruch 9 ein Druckabschneideventil vorgesehen sein.

Die Erfindung wird nachfolgend anhand eines bevorzugten Ausführungsbeispiels unter Bezugnahme auf die Zeichnung näher beschrieben. In der Zeichnung zeigen:
- Fig. 1: ein erstes Ausführungsbeispiel der erfindungsgemäßen hydraulischen Steuerung in der Neutralstellung,
- Fig. 2: das Ausführungsbeispiel entsprechend Figur 1 während der Beschleunigungsphase,
- Fig. 3: das Ausführungsbeispiel entsprechend Figur 1 während der Verzögerungsphase, wenn das Drehwerk keinen Drehwiderstand erfährt,
- Fig. 4: das Ausführungsbeispiel entsprechend Figur 1 während der Verzögerungsphase, wenn das Drehwerk einen Drehwiderstand erfährt,
- Fig. 5: ein nicht erfindungsgemäßes Beispiel einer hydraulischen Steuerung in der Neutralstellung, und
- Fig. 6: ein zweites Ausführungsbeispiel der erfindungsgemäßen hydraulischen Steuerung in der Neutralstellung.

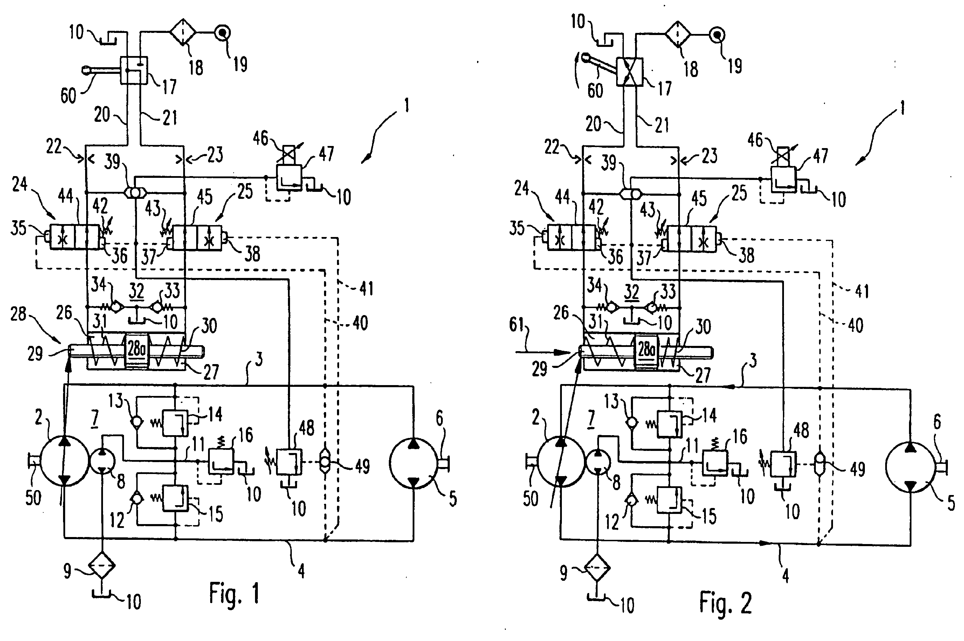

Fig. 1 zeigt ein erstes Ausführungsbeispiel der erfindungsgemäßen Steuerung. In den Ausführungsbeispielen ist die Steuerung 1 zur Ansteuerung des Drehwerks eines Baggers ausgelegt.

Eine verstellbare Hydropumpe 2 ist über eine Antriebswelle 50 mit einem nicht dargestellten Antriebsmotor, z.B. einem Dieselmotor, verbunden. Über einen durch die Arbeitsleitungen 3 und 4 gebildeten Antriebskreislauf steht der Hydromotor 5 mit der Hydropumpe 2 in Verbindung. Der Hydromotor 5 treibt über eine Antriebswelle 6 das nicht dargestellte Drehwerk des Baggers an.

Das Druckfluid des Antriebskreislaufs wird über eine Speiseeinrichtung 7 nachgespeist, die eine ebenfalls mit dem Antriebsmotor verbundene Speisepumpe 8 umfaßt. Die Speisepumpe 8 saugt über ein Speisefilter 9 aus einem Druckfluid-Tank 10 kontinuierlich Druckfluid nach und speist dieses in die Speiseleitung 11 ein. Die Speiseleitung 11 ist über Rückschlagventile 12 und 13 mit den Arbeitsleitungen 3 und 4 verbunden und speist das Druckfluid jeweils in die den Niederdruck führende Arbeitsleitung 3 bzw. 4 ein. Der Speisedruck wird durch Druckregelventile 14 und 15 eingeregelt. Zur Begrenzung des Drucks in der Speiseleitung 11 dient das Überdruckventil 16.

Die Ansteuerung des Verdrängungsvolumens der Hydropumpe 2 erfolgt über den Handsteuergeber 17, der mit dem Druckfluid-Tank 10 und über das Steuerdruckfilter 18 mit einer Steuerdruckeinspeisung 19 in Verbindung steht. Der Handsteuergeber 17 beaufschlagt in Abhängigkeit von seiner Auslenkung eine der beiden Steuerleitungen 20 oder 21 mit einem Steuerdruck. In der in Fig. 1 dargestellten Neutralstellung sind beide Steuerleitungen 20 und 21 über den Handsteuergeber 17 zu dem Druckfluid-Tank 10 hin belüftet.

Die Steuerleitungen 20, 21 sind über Drosselstellen 22 und 23 und noch näher zu beschreibende Bremsventile 24 und 25 mit jeweils einer Stelldruckkammer 26 und 27 der Verstellvorrichtung 28 verbunden.

Zwischen den Stelldruckkammern 26 und 27 ist ein Stellkolben 28a angeordnet, der über eine Kolbenstange 29 das Verdrängungsvolumen der Hydropumpe 2 verstellt. Der Stellkolben 28a wird über Zentrierfedern 30 und 31 in seiner in Figur 1 dargestellten Neutralstellung zentriert.

Zwischen jedem Bremsventil 24 und 25 und der diesem zugeordneten Stelldruckkammer 26 und 27 mündet eine Nachsaugeeinrichtung 32 in die Steuerleitungen 20 und 21 ein. Im dargestellten Ausführungsbeispiel besteht die Nachsaugeeinrichtung 32 aus zwei Rückschlagventilen 33 und 34 und dient zum Nachsaugen von Druckfluid aus dem Druckfluid-Tank 10 während der Rückführung des Stellkolbens 28a in seine Neutralstellung.

Die Bremsventile 24 und 25 weisen jeweils zwei Ansteuer-Druckkammern 35 und 36 bzw. 37 und 38 auf. Die Ansteuer-Druckkammern 36 und 37 sind über ein Wechselventil 39 mit den beiden Steuerleitungen 20 und 21 verbunden. Die den Ansteuer-Druckkammern 36 und 37 gegenüberliegenden Ansteuer-Druckkammern 35 und 38 sind über Arbeitsleitungs-Verbindungsleitungen 40 und 41 mit jeweils einer der beiden Arbeitsleitungen 3 oder 4 verbunden. In der in Fig. 1 dargestellten Neutralstellung sind beide Steuerleitungen 20 und 21 über den Handsteuergeber 17 zu dem Druckfluid-Tank 10 hin belüftet, so daß die Ansteuer-Druckkammern 36 und 37 drucklos sind. Da sich der Stellkolben 28a in seiner Neutralstellung befindet und daher die Hydropumpe 2 mit Null-Verdrängungsvolumen arbeitet, sind die Arbeitsleitungen 3 und 4 ebenfalls drucklos, so daß sich zwischen den Ansteuer-Druckkammern 35 bzw. 37 einerseits und 36 bzw. 38 andererseits keine Druckdifferenz einstellt. Die Bremsventile 24 und 25 werden daher mittels der justierbaren Druckfedern 42 und 43 mit ihren ungedrosselten Schaltstellungen 44 und 45 gehalten.

Zur Begrenzung des Steuerdrucks in den Steuerleitungen 20 und 21 nach den Drosselstellen 22 und 23 ist im Ausführungsbeispiel ein über einen Geber 46 einstellbares Druckabschneideventil 47 vorgesehen, das die druckführende Steuerleitung 20 bzw. 21 bei Überschreiten eines vorgegebenen Maximaldrucks zum Druckfluid-Tank 10 hin begrenzt. Ein weiteres Überdruckventil 48 wird über ein Wechselventil 49 von den Arbeitsleitungen 3 und 4 angesteuert.

Die Funktion der erfindungsgemäßen Bremsventile 24 und 25 des ersten Ausführungsbeispiels wird nachfolgend anhand der in den Figuren 2 bis 4 dargestellten Betriebszustände der hydraulischen Steuerung näher beschrieben.

Fig. 2 zeigt die hydraulische Steuerung in der Beschleunigungsphase. Durch Auslenken des Steuerknüppels 60 des Handsteuergebers 17 wird die Steuerleitung 20 über das Steuerdruckfilter 18 aus der Steuerdruckeinspeisung 19 mit Steuerdruck beaufschlagt, während die andere Steuerleitung 21 zu dem Druckfluid-Tank 10 hin belüftet wird. Dadurch wird die Stelldruckkammer 26 über das Bremsventil 24 mit Steuerdruck beaufschlagt, so daß sich der Stellkolben 28a in der durch den Pfeil 61 angedeuteten Richtung verschiebt. Die Hydropumpe 2 wird entsprechend ausgeschwenkt und in der Arbeitsleitung 4 ein entsprechender Hochdruck aufgebaut, um den Hydromotor 5 in der gewünschten Drehrichtung anzutreiben. Auf diese Weise wird das an den Hydromotor 5 gekoppelte Drehwerk des Baggers beschleunigt. Die Bremsventile 24 und 25 befinden sich dabei in den ungedrosselten Schaltstellungen 44 und 45, da während der in Fig. 2 dargestellten Beschleunigungsphase sich in der Steuerleitung 20 und somit auch in den Ansteuer-Druckkammern 36 und 37 ein entsprechender Steuerdruck befindet, der die Bremsventile 24 und 25 in ihre ungedrosselten Schaltstellungen drückt.

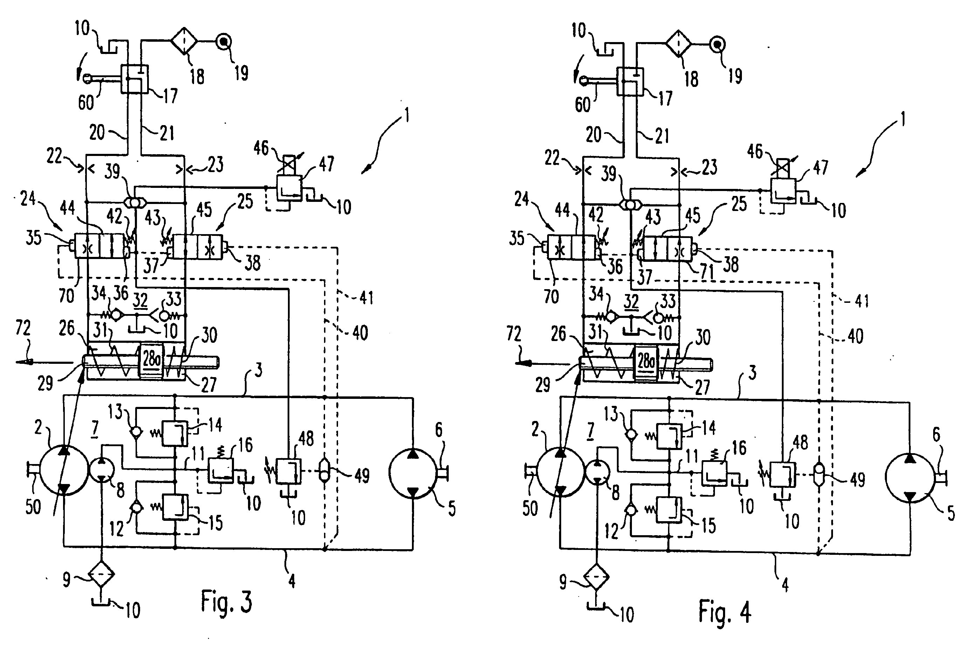

Nach Erreichen der gewünschten Drehgeschwindigkeit kann der Steuerknüppel 60 von der Bedienperson losgelassen werden, so daß dieser in die in Fig. 3 dargestellte Neutralstellung zurückschwenkt. Daraufhin wird die Steuerleitung 20 als auch die Steuerleitung 21 zum Druckfluid-Tank 10 hin belüftet und der Steuerdruck in der Steuerleitung 20 abgebaut. Entsprechend werden auch die Ansteuer-Druckräume 36 und 37 der Bremsventile 24 und 25 nicht mehr mit Steuerdruck beaufschlagt.

Aufgrund des während der Beschleunigungsphase in die Stelldruckkammer 26 eingefüllten Druckfluids befindet sich die Hydropumpe 2 jedoch zunächst weiterhin in ihrer ausgelenkten Stellung. Sofern sich das an den Hydromotor 5 gekoppelte Drehwerk in dieser in Figur 3 dargestellten Verzögerungsphase frei drehen kann, ohne irgendwelchen Widerständen ausgesetzt zu sein, baut sich in der Arbeitsleitung 3 ein Druck auf, während der Druck in der Arbeitsleitung 4 unter den in der Arbeitsleitung 3 herrschenden Druck abfällt. Es tritt daher ein Druckseitenwechsel auf, wobei die während der Beschleunigungsphase als Niederdruck-Arbeitsleitung arbeitende Arbeitsleitung 3 nunmehr zur Hochdruck-Arbeitsleitung und die während der Beschleunigungsphase als Hochdruck-Arbeitsleitung dienende Arbeitsleitung 4 nunmehr zur Niederdruck-Arbeitsleitung geworden ist. Diesen Effekt macht sich die vorliegende Erfindung zunutze.

Die über die Arbeitsleitungs-Verbindungsleitung 40 mit der Hochdruck-Arbeitsleitung 3 verbundene Ansteuer-Druckkammer 35 des Bremsventils 24 bewirkt nunmehr ein Umschalten des Bremsventils 24 in die gedrosselte Schaltstellung 70. In der in Figur 3 dargestellten Verzögerungsphase wird der Stellkolben 28a mittels der Zentrierfedern 26 und 27 in seine in Fig. 1 dargestellte Neutralstellung zurückgedrückt, was durch den Pfeil 72 angedeutet ist. Der Rückfluß des Druckfluids aus der Stelldruckkammer 26 über die Steuerleitung 20 zum Druckfluid-Tank 10 hin wird jedoch durch das in der Steuerleitung 20 befindliche Bremsventil 24 gedrosselt, da dieses Bremsventil 24 sich in seiner gedrosselten Schaltstellung 70 befindet. Die Rückstellung des Stellkolbens 28 erfolgt in diesem Betriebszustand daher relativ langsam, was sich in einem feinfühligen, zögerlichen Abbremsen des Drehwerks äußert.

Der sich in der Stelldruckkammer 27 durch die Rückführung des Stellkolbens 28 einstellende Unterdruck bewirkt ein Nachsaugen von Druckfluid aus dem Druckfluid-Tank 10 über die Nachsaugeeinrichtung 32. Dabei öffnet das Rückschlagventil 33.

In Fig. 4 ist der Betriebszustand in der Verzögerungsphase für den Fall dargestellt, daß das Drehwerk während der Verzögerungsphase einem Widerstand ausgesetzt ist und sich das Drehwerk nicht entsprechend seinem Trägheitsmoment frei drehen kann. Ein solcher Widerstand wird insbesondere dadurch hervorgerufen, daß sich der Bagger (in welchem sich das Drehwerk befindet), auf einer schiefen Ebene steht, wie dies im Baustellenbereich sehr häufig vorkommt. Wenn das Drehwerk in einem Drehwinkelbereich abgebremst wird, in dem sich der an dem Drehwerk befindliche Ausleger bergauf bewegt, kommt es aufgrund der Hangabtriebskräfte zu einem relativ schnellen Abbremsen des Drehwerks. Der vorstehend anhand von Fig. 3 beschriebene Druckseitenwechsel tritt dabei nicht auf. Vielmehr wird der Hydromotor 5 durch die noch ausgelenkte Hydropumpe 2 weiterhin angetrieben. In der Arbeitsleitung 4 baut sich in diesem Betriebszustand daher ein Hochdruck auf, während die Arbeitsleitung 3 als Niederdruck-Rückflußleitung arbeitet.

In dem in Fig. 4 dargestellten Betriebszustand wird daher nicht das Bremsventil 24, sondern das mit der in diesem Fall mit Hochdruck beaufschlagten Arbeitsleitung 4 verbundene Bremsventil 25 in seine gedrosselte Schaltstellung 71 geschoben. Erfindungswesentlich ist, daß das Schaltventil 24 im Gegensatz zu dem anhand von Figur 3 erläuterten Betriebszustand in seiner ungedrosselten Schaltstellung 44 verbleibt. Das in die Stelldruckkammer 26 während der Beschleunigungsphase eingefüllte Druckfluid kann während des Rückstellens des Stellkolbens 28a in seine Neutralstellung mittels der Zentrierfedern 30 und 31 daher relativ rasch über das ungedrosselte Bremsventil 24 und die Steuerleitung 20 zum Druckfluid-Tank 10 hin entweichen.

Die Schaltstellung des anderen Bremsventils 25 ist in diesem Betriebszustand ohne Bedeutung, da das in die Stelldruckkammer 27 nachfließende Druckfluid nicht über das Bremsventil 25, sondern über die Nachsaugeeinrichtung 32, d.h. über das geöffnete Rückschlagventil 33, aus dem Druckfluid-Tank 10 nachgesaugt wird. Der Stellkolben 28a wird daher im Gegensatz zu dem in Figur 3 dargestellten Betriebszustand relativ rasch in seine in Figur 1 dargestellte Neutralstellung zurückgeführt. Dies bedingt ein relativ rasches Zurückschwenken der Hydropumpe 2 auf Null-Verdrängungsvolumen, so daß der Hydromotor 5 von dieser nicht weiterhin angetrieben wird. Dadurch wird ein unkontrolliertes Weiterschwenken des Drehwerks in diesem Betriebszustand wirksam verhindert.

Dies ist insbesondere auch dann wesentlich, wenn der Ausleger des Drehwerks auf einen starren Widerstand trifft, in dem der Ausleger an einem Haufwerk od.dgl. anschlägt.

Wenn die Hydropumpe 2 in die umgekehrte Förderrichtung ausgeschwenkt wird, indem während der Beschleunigungsphase mittels des Handsteuergebers 17 die Steuerleitung 21 mit Steuerdruck beaufschlagt wird, arbeitet die erfindungsgemäße hydraulische Steuerung nach dem gleichen Prinzip. Jedoch wird in diesem Fall über das Bremsventil 25 der Rückfluß des Druckfluids aus der während der Beschleunigungsphase befüllten Stelldruckkammer 27 zum Druckfluid-Tank 10 hin in der Verzögerungsphase wie vorstehend beschrieben gesteuert, während die Schaltstellung des Bremsventils 24 dann ohne Bedeutung ist.

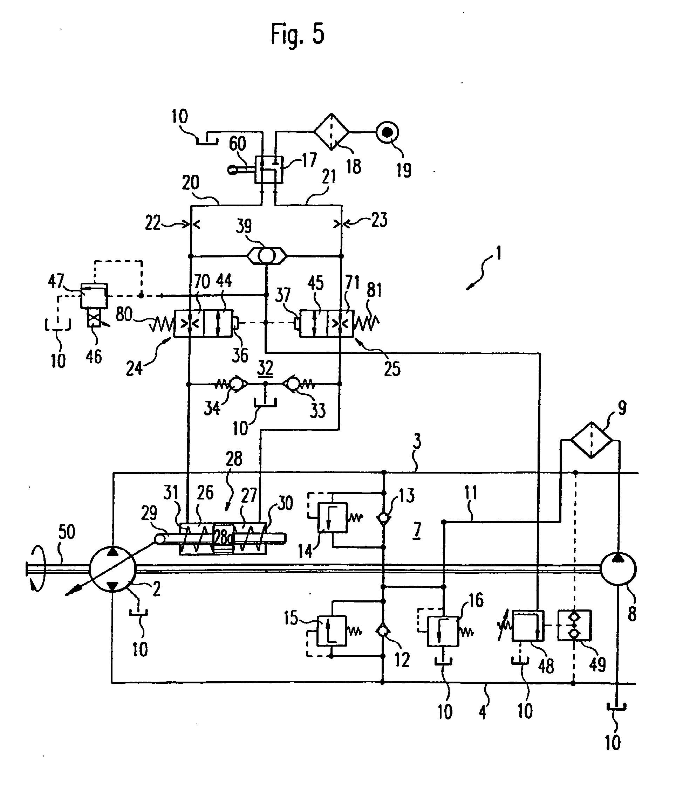

Fig. 5 zeigt ein nicht erfindungsgemäßes Beispiel einer Steuerung in ihrer Neutralstellung. Auch in diesem Beispiel ist die Steuerung 1 zur Ansteuerung des Drehwerks eines Baggers ausgelegt. Bereits beschriebene Elemente sind mit übereinstimmenden Bezugszeichen versehen, so daß sich diesbezüglich eine wiederholende Beschreibung erübrigt.

Die Bremsventile 24 und 25 weisen im in Fig. 5 dargestellten Beispiel jeweils eine Ansteuerung-Druckkammer 36 bzw. 37 auf. Die Ansteuer-Druckkammern 36 und 37 sind über ein Wechselventil 39 mit den beiden Steuerleitungen 20 und 21 verbunden. Den Ansteuerdruckkammern 36 und 37 gegenüberliegend sind jeweils ein Rückstellglied in Form einer Rückstellfeder 80 bzw. 81 vorgesehen. Jedes der beiden Bremsventile 24 bzw. 25 wird daher durch die Kraftdifferenz zwischen einer von dem Steuerdruck in der mit größerem Steuerdruck beaufschlagte Steuerleitung 20 bzw. 21 ausgeübten Stellkraft und einer von der jeweiligen Rückstellfeder 80 bzw. 81 ausgeübten Rückstellkraft angesteuert. In der in Fig. 5 dargestellten Neutralstellung sind die beiden Steuerleitungen 20 und 21 über den Handsteuergeber 17 zu dem Druckfluid-Tank 10 hin belüftet, so daß die Ansteuer-Druckkammern 36 und 37 drucklos sind. Die Bremsventile 24 und 25 werden daher durch die Rückstellfedern 80 und 81 in ihre jeweilige gedrosselte Schaltstellung 70 bzw. 71 geschaltet.

Nachfolgend wird die Funktion der erfindungsgemäßen Bremsventile 24 und 25 gemäß dem in Fig. 5 dargestellten Beispiel näher beschrieben.

Zum Beschleunigen des Drehwerks des Baggers wird entsprechend dem beabsichtigten Drehsinn die Hydropumpe 2 in eine ihrer Förderrichtungen ausgeschwenkt. Dazu wird über den Steuerknüppel 60 des Handsteuergebers 17 die Steuerleitung 20 oder die Steuerleitung 21 über das Steuerdruckfilter 18 aus der Steuerdruckeinspeisung 19 mit Steuerdruck beaufschlagt, während die jeweils andere Steuerleitung zu dem Druckfluid-Tank 10 hin belüftet wird. Dadurch wird die Stelldruckkammer 26 oder die Stelldruckkammer 27 über das Bremsventil 24 bzw. das Bremsventil 25 mit Steuerdruck beaufschlagt, so daß sich der Stellkolben 28a entsprechend verschiebt. Die Hydropumpe 2 wird entsprechend ausgeschwenkt und in einer der Arbeitsleitungen 3 oder 4 ein entsprechender Hochdruck aufgebaut, um den in Fig. 5 nicht dargestellten Hydromotor in der gewünschten Drehrichtung anzutreiben und das Drehwerk des Baggers zu beschleunigen. Die Bremsventile 24 und 25 befinden sich dabei in den ungedrosselten Schaltstellungen 44 und 45, da sich während der Beschleunigungsphase in einer der beiden Steuerleitungen 20 oder 21 und somit auch in den Ansteuer-Druckkammern 36 und 37 ein entsprechender Steuerdruck befindet, der die Bremsventile 24 und 25 in ihre ungedrosselten Schaltstellungen 44 bzw. 45 drückt.

Nach Erreichen der gewünschten Drehgeschwindigkeit kann der Steuerknüppel 60 von der Bedienperson losgelassen werden, so daß dieser in seine Neutralstellung zurückschwenkt. Daraufhin wird die Steuerleitung 20 als auch die Steuerleitung 21 zum Druckfluid-Tank 10 hin belüftet und der Steuerdruck in den Steuerleitungen 20, 21 abgebaut. Entsprechend werden auch die Ansteuer-Druckräume 36 und 37 der Bremsventile 24 und 25 nicht länger mit Steuerdruck beaufschlagt.

Aufgrund des während der Beschleunigungsphase in eine der Stelldruckkammern 26 oder 27 eingefüllten Druckfluids befindet sich die Hydropumpe 2 jedoch zunächst weiterhin in ihrer ausgeschwenkten Stellung. Das Druckfluid entweicht aus der während der Beschleunigungsphase mit Druckfluid beaufschlagte Stelldruckkammer 26 oder 27 über das der Stelldruckkammer zugeordnete Bremsventil 24 bzw. 25 und den Handsteuergeber 17 zum Druckfluid-Tank 10 hin. Dabei befinden sich die beiden Bremsventile 24 und 25 nunmehr in ihrer gedrosselten Schaltstellung 70 bzw. 71, da diese von der zugeordneten Rückstellfeder 80 bzw. 81 beaufschlagt werden und die Ansteuer-Druckkammern 36 und 37 im wesentlichen drucklos sind. Der Rückfluß des Druckfluids aus der jeweiligen Stelldruckkammer 26 bzw. 27 wird daher durch das jeweils zugeordnete Bremsventil 24 bzw. 25 gedrosselt. Die Rückstellung des Stellkolbens 28 erfolgt daher relativ langsam, was sich in einem feinfühligen, zögerlichen Abbremsen des Drehwerks äußert.

Der sich in der während der Beschleunigungsphase nicht mit Stelldruck beaufschlagten Stelldruckkammer durch die Rückführung des Stellkolbens 28 einstellende Unterdruck bewirkt ein Nachsaugen von Druckfluid aus dem Druckfluid-Tank 10 über die Nachsaugeeinrichtung 32. Dabei öffnet das jeweilige Rückschlagventil 33 bzw. 34.

Durch die Zuordnung eines jeweils separaten Bremsventils 24 bzw. 25 jeder Stelldruckkammern 26 und 27 der Verstellvorrichtung wird die Betriebssicherheit der Drehwerksteuerung erheblich verbessert, ohne den Aufwand wesentlich zu erhöhen. Durch die Anordnung der Bremsventile 24 und 25 unmittelbar an den Steuerleitungen 20 und 21 wird ein besonders schnelles Ansprechen der Bremsventile 24 und 25 erreicht.

Des weiteren läßt sich die Erfindung auch in Verbindung mit einer Vorsteuerung verwenden, so wie dies grundsätzlich aus der DE 44 05 472 A1 bekannt ist.

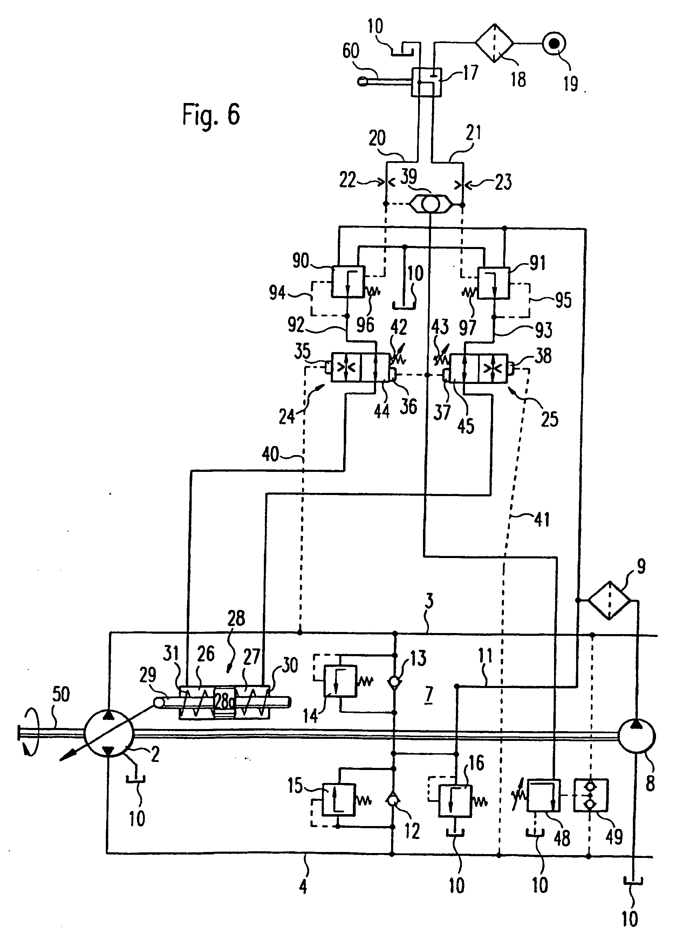

Fig. 6 zeigt eine erfindungsgemäße hydraulische Steuerung mit einem anderen, zweckmäßigen Ausführungsbeispiel für eine Vorsteuerung. Das in Fig. 6 veranschaulichte zweite Ausführungsbeispiel ist ähnlich gestaltet wie das in Fig. 5 dargestellte nicht erfindungsgemäße Beispiel. Bereits beschriebene Elemente sind dabei mit übereinstimmenden Bezugszeichen versehen, so daß sich die nachfolgende Beschreibung sich lediglich auf die Unterschiede und Besonderheiten bezieht.

Die Speiseeinrichtung 7 dient bei dem in Fig. 6 dargestellten Ausführungsbeispiel nicht nur zum Nachspeisen des Arbeitskreislaufs 2 bis 4, sondern auch zum Zuführen von Druckfluid an die Verstellvorrichtung 28. Jedem Bremsventil 24 und 25 ist jeweils ein Druckregelventil 90, 91 zugeordnet, welches jeweils stromaufwärts des zugeordneten Bremsventils 24, 25 angeordnet ist. Die Druckregelventile 90 und 91 sind einerseits mit der Speiseleitung 11 der Speiseeinrichtung 7 und andererseits mit dem Druckfluid-Tank 10 verbunden. Jedes Druckregelventil 90, 91 ist über eine Verbindungsleitung 92, 93 mit dem zugeordneten Bremsventil 24, 25 verbunden. Die Ansteuerung des Druckregelventils 90 bzw. 91 erfolgt proportional zu der Druckdifferenz zwischen dem in der jeweiligen Verbindungsleitung 92 bzw. 93 herrschenden Stelldruck und dem Steuerdruck in der zugeordneten Steuerleitung 20 bzw. 21. Dazu ist jeweils einer der Steuereingänge des Druckregelventils 90 bzw. 91 über eine zugeordnete Umwegleitung 94 bzw. 95 mit der Verbindungsleitung 92 bzw. 93 verbunden. Ein jeweils anderer Steuereingang des Druckregelventils 90 bzw. 91 steht mit der zugeordneten Steuerleitung 20 bzw. 21 in Verbindung. Der in den Verbindungsleitungen 92 und 93 herrschende Stelldruck ist daher im wesentlichen dem in der zugeordneten Steuerleitung 20 bzw. 21 herrschenden Steuerdruck proportional. Durch die Druckfedern 96 und 97 wird jedoch erreicht, daß der Stelldruck geringfügig, z.B. 1 bis 2 bar, über dem in der zugeordneten Steuerleitung 20 bzw. 21 herrschenden Steuerdruck liegt.

Während der Beschleunigungsphase wird der in der jeweiligen Stelldruckkammer 26 bzw. 27 herrschende Stelldruck durch das jeweilige Druckregelventil 90 bzw. 91 im wesentlichen proportional zu dem in der jeweiligen Steuerleitung 20 bzw. 21 herrschenden Steuerdruck zugemessen. In der Verzögerungsphase fließt das Druckfluid aus der Stelldruckkammer 26 bzw. 27 in der anhand der Fig. 1 bis 4 erläuterten Weise über das jeweilige Bremsventil 24 oder 25 über das jeweilige Druckbegrenzungsventil 90 bzw. 91 zum Druckfluid-Tank 10 zurück.

Die Nachsaugeeinrichtung 32 ist bei diesem Ausführungsbeispiel nicht erforderlich, da die Druckfluid-Versorgung derjenigen Stelldruckkammer, deren Volumen sich bei der Rückstellung in Neutralstellung vergrößert, über die Speiseeinrichtung 7, die Speiseleitung 11 und das zugeordnete Druckregelventil 90 bzw. 91 sowie das zugeordnete Bremsventil 24 bzw. 25 erfolgt. Der Vorteil liegt insbesondere darin, daß kein Saugwiderstand zu überwinden ist, sondern über die Speisepumpe 8 eine aktive Einspeisung in die Verstellvorrichtung 28 erfolgt. Eine eventuelle Verunreinigung durch Schmutzpartikel wird durch das Speisefilter 9 sicher und wirkungsvoll vermieden. Grundsätzlich ist es auch möglich, ein Nachsaugefilter in der passiven Nachsaugeeinrichtung 32 vorzusehen. Jedoch ist dieses gegenüber dem Speisefilter 9 wesentlich größer zu dimensionieren, um den Saugwiderstand möglichst gering zu halten. Dies steht jedoch nicht mit dem Ziel einer möglichst kompakten Bauweise im Einklang.

Die Erfindung ist nicht auf das dargestellte Ausführungsbeispiel begrenzt. Insbesondere sind die Bremsventile 24 und 25 nicht notwendigerweise unmittelbar in den Steuerleitungen 20 und 21 anzuordnen. Sie können an beliebiger Stelle in der Rückflußleitung zwischen den Stelldruckkammern 26 und 27 und dem Druckfluid-Tank vorgesehen sein.

## Patentansprüche

1. Hydraulische Steuerung, insbesondere zum Ansteuern des Drehwerks eines Baggers, mit
einem hydraulischen Antriebskreislauf (2-4) mit einer Hydropumpe (2) und einem Hydromotor (5), sowie einer ersten und einer zweiten die Hydropumpe (2) mit dem Hydromotor (5) verbindenden Arbeitsleitung (3, 4),
einer Verstellvorrichtung (28) zum Verstellen eines zwischen zwei Stelldruckkammern (26, 27) angeordneten, auf das Verdrängungsvolumen der Hydropumpe (2) einwirkenden Stellkolbens (28a) in Abhängigkeit von der Druckdifferenz zwischen zwei Steuerleitungen (20, 21) und
zumindest einem Bremsventil, das bei verschwindendem Steuerdruck in den Steuerleitungen (20, 21) den Rückfluß des Druckfluids aus den Stelldruckkammern (26, 27) in den Druckfluid-Tank (10) drosselt,
**dadurch gekennzeichnet,**
**daß** jeder Verbindung zwischen jeder der beiden Stelldruckkammern (26; 27) mit dem Druckfluid-Tank (10) jeweils ein separates Bremsventil (24; 25) zugeordnet ist,
wobei ein erstes der beiden Bremsventile (24) durch die Druckdifferenz zwischen dem Arbeitsdruck in der ersten Arbeitsleitung (3) und dem Steuerdruck in der mit größerem Druck beaufschlagten Steuerleitung (20, 21) angesteuert wird und
das zweite der beiden Bremsventile (25) durch die Druckdifferenz zwischen dem Arbeitsdruck in der zweiten Arbeitsleitung (4) und dem Steuerdruck in der mit größerem Druck beaufschlagten Steuerleitung (20, 21) angesteuert wird.

2. Hydraulische Steuerung nach Anspruch 1,
**dadurch gekennzeichnet,**
**daß** jedes Bremsventil (24; 25) jeweils mit derjenigen Arbeitsleitung (3; 4) verbunden ist, die beim Ausschwenken der Hydropumpe (2) durch Beaufschlagen der dem Bremsventil (24; 25) zugeordneten Stelldruckkammer (26; 27) die Niederdruck-Rücklaufleitung (3; 4) des Antriebskreislaufes (3, 4) bildet.

3. Hydraulische Steuerung nach Anspruch 1 oder 2,
**dadurch gekennzeichnet,**
**daß** jedes Bremsventil (24; 25) als Schaltventil mit einer ersten Schaltstellung (44; 45) mit ungedrosseltem Durchfluß und einer zweiten Schaltstellung (70; 71) mit gedrosseltem Durchfluß ausgebildet ist,
wobei sich das Bremsventil (24; 25) in der ersten Schaltstellung (44; 45) befindet, wenn die Druckdifferenz zwischen dem Arbeitsdruck in der zugeordneten Arbeitsleitung (3; 4) und dem Steuerdruck in der mit größerem Druck beaufschlagten Steuerleitung (20, 21) kleinere als ein vorgegebener Schwellwert ist und
sich das Bremsventil (24; 25) in der zweiten Schaltstellung (70; 71) befindet, wenn die Druckdifferenz zwischen dem Arbeitsdruck in der zugeordneten Arbeitsleitung (3; 4) und dem Steuerdruck in der mit größerem Druck beaufschlagten Steuerleitung (20, 21) größer als der vorgegebene Schwellwert ist.

4. Hydraulische Steuerung nach einem der Ansprüche 1 bis 3,
**dadurch gekennzeichnet,**
**daß** jedes Bremsventil (24; 25) zwei Ansteuer-Druckkammern (35, 36; 37, 38) aufweist,
wobei eine erste Ansteuer-Druckkammer (35; 38) mit der zugeordneten Arbeitsleitung (3; 4) und die zweite Ansteuer-Druckkammer (36; 37) mit den Steuereleitungen (20, 21) verbunden ist.

5. Hydraulische Steuerung nach Anspruch 4,
**dadurch gekennzeichnet,**
**daß** die zweiten Ansteuer-Druckkammern (36, 37) über ein Wechselventil (39) mi den Steuerleitungen (20, 21) verbunden sind.

6. Hydraulische Steuerung nach einem der Ansprüche 1 bis 5,
**dadurch gekennzeichnet,**
**daß** die Bremsventile (24, 25) in den Steuerleitungen (20, 21) angeordnet sind.

7. Hydraulische Steuerung nach Anspruch 6,
**dadurch gekennzeichnet,**
**daß** zwischen den Bremsventilen (24; 25) und den zugeordneten Stelldruckkammern (26, 27) eine Nachsaugeeinrichtung (32) zum Nachsaugen von Druckfluid aus dem Druckfluid-Tank (10) vorgesehen ist.

8. Hydraulische Steuerung nach einem der Ansprüche 1 bis 7,
**dadurch gekennzeichnet,**
**daß** die Steuerleitungen (20, 21) über einen mit dem Druckfluid-Tank (10) und einer Steuerdruckeinspeisung (19) verbundenen Steuergeber (17) wechselseitig mit Steuerdruck beaufschlagbar oder zum Druckfluid-Tank (10) hin belüftbar sind.

9. Hydraulische Steuerung nach einem dere Ansprüche 1 bis 8,
**dadurch gekennzeichnet,**
**daß** ein Druckabschneideventil (47) zur Begrenzung des Steuerdrucks in den Steuerleitungen (20, 21) auf einen Maximaldruck vorgesehen ist.

10. Hydraulische Steuerung nach einem der Ansprüche 1 bis 9,
**dadurch gekennzeichnet,**
**daß** eine Speiseeinrichtung (7) zum Einspeisen von Druckfluid in den Arbeitskreislauf (2-4) vorgesehen ist,
**daß** jedem Bremsventil (24; 25) jeweils ein Druckregelventil (90; 91) zugeordnet ist und
**daß** der dem jeweiligen Bremsventil (24; 25) zugeordneten Stelldruckkammer (26, 27) über das jeweilige Bremsventil (24; 25) ein Stelldruck zuführbar ist, der von dem zugeordneten Druckregelventil (90; 91) in Abhängigkeit von dem in einer zugeordneten Steuerleitung (20; 21) herrschenden Steuerdruck geregelt wird.

## Claims

1. Hydraulic controller, in particular for the control of the rotating mechanism of an excavator, having
a hydraulic drive circuit (2 - 4) with a hydraulic pump (2) and a hydraulic motor (5), and a first and a second working line (3, 4) connecting the hydraulic pump (2) with the hydraulic motor (5),
an adjustment arrangement (28) for adjusting a setting piston (28a), arranged between two setting pressure chambers (26, 27), acting on the displacement volume of the hydraulic pump (2), in dependence upon the pressure difference between two control lines (20, 21) and
at least one brake valve which, with disappearing control pressure in the control lines (20, 21), throttles the return flow of the pressure fluid out of the setting pressure chambers (26, 27) into the pressure fluid tank (10),
**characterized in that**,
a respective separate brake valve (24; 25) is associated with each connection between each of the two setting pressure chambers (26; 27) with the pressure fluid tank (10),
whereby a first of the two brake valves (24) is controlled by means of the pressure difference between the working pressure in the first working line (3) and the control pressure in the control line (20, 21) acted upon by the greater pressure, and
the second of the two brake valves (25) is controlled by means of the pressure difference between the working pressure in the second working line (4) and the control pressure in the control line (20, 21) acted upon by the greater pressure.

2. Hydraulic controller according to claim 1,
**characterized in that**,
each brake valve (24; 25) is respectively connected with that working line (3; 4) which upon swinging out of the hydraulic pump (2) by means of action upon the setting pressure chamber (26; 27) associated with the brake valve (24; 25) forms the low pressure return line (3; 4) of the drive circuit (3,4).

3. Hydraulic controller according to claim 1 or 2,
**characterized in that**,
each brake valve (24; 25) is formed as a switching valve having a first switching position (44; 45) with non-throttled through-flow and a second switching position (70; 71) with throttled through-flow
whereby the brake valve (24; 25) is in the first switching position (44; 45) when the pressure difference between the working pressure in the associated working line (3; 4) and the control pressure in the control line (20, 21) acted upon with the greater pressure is smaller than a predetermined threshold value, and
the brake valve (24; 25) is in the second switching position (70; 71) when the pressure difference between the working pressure in the associated working line (3; 4) and the control pressure in the control line (20, 21) acted upon with the greater pressure is greater than the predetermined threshold value.

4. Hydraulic controller according to any of claims 1 to 3,
**characterized in that**,
each brake valve (24; 25) has two control pressure chambers (35, 36; 37, 38), whereby a first control pressure chamber (35; 38) is connected with the associated working line (3; 4) and the second control pressure chamber (36; 37) is connected with the control lines (20, 21).

5. Hydraulic controller according claim 4,
**characterized in that**,
the two control pressure chambers (36, 37) are connected with the control lines (20, 21) via a change-over valve (39).

6. Hydraulic controller according to any of claims 1 to 5,
**characterized in that**,
the brake valves (24, 25) are arranged in the control lines (20, 21).

7. Hydraulic controller according claim 6,
**characterized in that**,
an after-suction arrangement (32), for the after-suction of pressure fluid out of the pressure fluid tank (10), is provided between the brake valves (24; 25) and the associated setting pressure chambers (26, 27).

8. Hydraulic controller according to any of claims 1 to 7,
**characterized in that**,
the control lines (20, 21) can be alternately acted upon with control pressure or vented to the pressure fluid tank (10) via a controller (17) connected with the pressure fluid tank (10) and a control pressure in-feed (19).

9. Hydraulic controller according to any of claims 1 to 8,
**characterized in that**,
a pressure cut-off valve (47) is provided for limiting the control pressure in the control lines (20, 21) to a maximum pressure.

10. Hydraulic controller according to any of claims 1 to 9,
**characterized in that**,
a feed arrangement (7) is provided for the feed-in of pressure fluid into the working circuit (2 - 4),
**in that** a respective pressure regulation valve (90; 91) is associated with each brake valve (24; 25) and
**in that** a setting pressure can be supplied to the setting pressure chamber (26, 27) associated with the respective brake valve (24; 25), via the respective brake valve (24; 25), which setting pressure is regulated by the associated pressure regulation valve (90; 91) in dependence upon the control pressure prevailing in an associated control line (20; 21).

## Revendications

1. Commande hydraulique, en particulier pour piloter le mécanisme de rotation d'un excavateur, comportant
un circuit d'entraînement hydraulique (2 - 4) avec une pompe hydraulique (2) et un moteur hydraulique, ainsi qu'une première et une deuxième conduite de travail (3, 4) reliant la pompe hydraulique (2) au moteur hydraulique (5),
un dispositif de réglage (28) pour régler un piston de réglage (28a) agencé entre deux chambres à pression de réglage (26, 27) agissant sur le volume de refoulement de la pompe hydraulique (2) en fonction de la différence de pression entre deux conduites de commande (20, 21), et
au moins une soupape de freinage qui, lorsque la pression de commande disparaît dans les conduites de commande (20, 21), étrangle le reflux du fluide sous pression depuis les chambres à pression de réglage (26, 27) jusque dans le réservoir (10) de fluide sous pression,
**caractérisée en ce que**
à chaque liaison entre chacune des deux chambres à pression de réglage (26, 27) avec le réservoir (10) de fluide sous pression est associée une soupape de freinage (24, 25) séparée respective,
une première des deux soupapes de freinage (24) est pilotée par la différence de pression entre la pression de travail dans la première conduite de travail (3) et la pression de commande dans la conduite de commande (20, 21) alimentée avec la pression plus forte, et
la deuxième des deux soupapes de freinage (25) est pilotée par la différence de pression entre la pression de travail dans la deuxième conduite de travail (4) et la pression de commande dans la conduite de commande (20, 21) alimentée avec la pression plus forte.

2. Commande hydraulique selon la revendication 1,
**caractérisée en ce que**
chaque soupape de freinage (24 ; 25) est reliée respectivement à la conduite de travail (3 ; 4) qui, lors du pivotement de la pompe hydraulique (2) par l'alimentation de la chambre à pression de réglage (26 ; 27) associée à la soupape de freinage, forme la conduite de reflux de basse pression (3 ; 4) du circuit d'entraînement (3, 4).

3. Commande hydraulique selon l'une ou l'autre des revendications 1 et 2,
**caractérisée en ce que**
chaque soupape de freinage (24 ; 25) est réalisée sous forme de soupape de commutation avec une première position de commutation (44 ; 45) avec un débit non étranglé et une deuxième position de commutation (70 ; 71) avec débit étranglé,
chaque soupape de freinage (24 ; 25) se trouve dans la première position de commutation (44 ; 45) lorsque la différence de pression de entre la pression de travail dans la conduite de travail (3, 4) associée et la pression de commande dans la conduite de commande (20, 21) alimentée par une pression plus élevée est inférieure à une valeur seuil prédéterminée, et
la soupape de freinage (24 ; 25) se trouve dans la deuxième position de commutation (70 ; 71) lorsque la différence de pression entre la pression de travail dans la conduite de travail (3 ; 4) associée et la pression de commande dans la conduite de commande (20, 21) alimentée par une pression plus élevée est supérieure à la valeur seuil prédéterminée.

4. Commande hydraulique selon l'une quelconque des revendications 1 à 3,
**caractérisée en ce que**
chaque soupape de freinage (24 ; 25) présente deux chambres de pression de pilotage (35, 36 ; 37, 38), une première chambre de pression de pilotage (35, 38) étant reliée à la conduite de travail (3 ; 4) associée, et la deuxième chambre de pression de pilotage (36 ; 37) étant reliée aux conduites de commande (20, 21).

5. Commande hydraulique selon la revendication 4,
**caractérisée en ce que**
les deuxièmes chambres de pression de pilotage (36, 37) sont reliées par une soupape d'inversion (39) aux conduites de commande (20, 21).

6. Commande hydraulique selon l'une quelconque des revendications 1 à 5,
**caractérisée en ce que**
les soupapes de freinage (24, 25) sont agencées dans les conduites de commande (20, 21).

7. Commande hydraulique selon la revendication 6,
**caractérisée en ce que**
entre les soupapes de freinage (24 ; 25) et les chambres de pression de réglage (26, 27) associées est prévu un dispositif de réaspiration (32) pour réaspirer le fluide sous pression hors du réservoir (10) de fluide sous pression.

8. Commande hydraulique selon l'une quelconque des revendications 1 à 7,
**caractérisée en ce que**
par l'intermédiaire d'un capteur de commande (17) qui est relié au réservoir (10) de fluide sous pression et à une alimentation en pression de commande (19), les conduites de commande (20, 21) peuvent être alternativement alimentées en pression de commande ou déchargées vers le réservoir (10) de fluide sous pression.

9. Commande hydraulique selon l'une quelconque des revendications 1 à 8,
**caractérisée en ce que**
il est prévu une soupape de coupure de pression (47) pour limiter à une pression maximum la pression de commande dans les conduites de commande (20, 21).

10. Commande hydraulique selon l'une quelconque des revendications 1 à 9,
**caractérisée en ce que**
il est prévu un système d'alimentation (7) pour alimenter le circuit de travail (2 - 4) en fluide de pression,
à chaque soupape de freinage (24 ; 25) est associée une soupape de réglage de pression (90 ; 91) respective, et
on peut amener à la chambre de pression de réglage (26, 27) associée à la soupape de freinage (24 ; 25) respective, via la soupape de freinage (24 ; 25) respective, une pression de réglage qui est régulée par la soupape de régulation de pression associée (90 ; 91) en fonction de la pression de commande régnant dans une conduite de commande (20 ; 21) associée.
